**Europäisches Patentamt**

**European Patent Office**

**Office européen des brevets**

(11) Numéro de publication: **0 172 110**
**B1**

## (12) FASCICULE DE BREVET EUROPÉEN

(45) Date de publication du fascicule du brevet:
12.10.88

(21) Numéro de dépôt: 85401611.0

(22) Date de dépôt: 07.08.85

(51) Int. Cl.⁴: **H 04 N 13/00, H 04 N 15/00**

(54) Procédé et dispositif d'enregistrement et de restitution en relief d'images vidéo animées stéréoscopiques.

(30) Priorité: 10.08.84 FR 8412694

(43) Date de publication de la demande:
19.02.86 Bulletin 86/8

(45) Mention de la délivrance du brevet:
12.10.88 Bulletin 88/41

(84) Etats contractants désignés:
AT BE CH DE GB IT LI LU NL SE

(56) Documents cité:
GB-A-2 114 395
US-A-3 251 933
US-A-3 784 738

(73) Titulaire: GIRAVIONS DORAND, Société dite:, 5
rue Jean Macé, F-92150 Suresnes (FR)

(72) Inventeur: Allard, Jean- Claude, 13 rue Ravon,
F-92340 Bourg La Reine (FR)
Inventeur: Saunier, Christian, 3 rue Derondel,
F-95120 Ermont (FR)

(74) Mandataire: Thibon- Littaye, Annick, Cabinet A.
THIBON- LITTAYE 11 rue de l'Etang, F-78160
Marly- le- Roi (FR)

## Description

La présente invention concerne les techniques qui permettent d'enregistrer des images animées sous forme de signaux vidéo, de manière a les restituer ensuite, à partir des signaux enregistrés, sous forme d'images animées stéréoscopiques, que l'observateur voit en relief.

La reproduction d'images animées en stéréoscopie est un problème auquel les chercheurs et inventeurs se sont déjà souvent attaqués. Comme solution, on a proposé notamment de superposer deux images cinématographiques prises simultanément sous des angles différents correspondant à l'écartement des deux yeux et d'observer ces images superposées à travers des lunettes équipées de filtres correspondants (voir par ex. la demande de brevet GB-A-2 114 395). La vision est alors effectivement en trois dimensions, mais elle ne peut être que monochrome, ce qui constitue une limitation importante pour certaines applications; de plus, la nécessité que tous les observateurs soient munis de lunettes conçues spécialement est souvent prohibitive. La vision monochrome et le port de lunettes spéciales sont aussi de sérieux handicaps des procédés qui créent des images similaires par balayage par faisceau d'électrons ; en télévision comme en projection cinématrographique, il est nécessaire de séparer à la restitution, la partie de l'image destinée à l'oeil gauche de celle destinée à l'oeil droit. Plus récemment, on a proposé d'utiliser des lunettes à verres électro-optiques, commandés pour être, en opposition, alternativement opaques et transparents, pour observer des images visualisées en synchronisme, alternativement celles créées pour l'oeil droit et celles créées pour l'oeil gauche. Les images peuvent alors être en couleurs, mais on n'élimine pas l'inconvénient d'avoir à faire porter des lunettes spéciales par les observateurs, du moins si l'on entend obtenir un effet de relief. De plus cette technique implique l'utilisation du balayage vidéo en deux demitrames, respectivement réservées aux images droites et aux images gauches, et comme elles sont alternativement occultées, ceci entraîne une diminution non négligeable de la résolution.

La présente invention permet de s'affranchir des inconvénients des techniques antérieures, et plus particulièrement de ceux qui viennent d'être rappelés. Elle a pour objet un procédé nouveau et original qui conduit à une réalisation simple et attrayante dans le domaine des jeux d'arcade, mais aussi dans celui de la simulation de tir. Elle fait appel à cet effet aux particularités des vidéo-disques.

On sait que dans le domaine propre des vidéodisques, les images vidéo successives sont enregistrées, image par image, en cercles concentriques de rayons progressivement variables. Par ailleurs, il est possible de synchroniser la lecture de deux vidéo-disques, en vitesse de rotation, avec une très grande précision.

Le procédé objet de l'invention consiste essentiellement à enregistrer une scène animée, observée simultanément sous deux angles différents, sous forme de signaux vidéo sur deux vidéo-disques, qui contiennent ainsi après enregistrement une séquence d'images gauches et une séquence d'images droites respectivement, à réaliser également des symboles ou images synthétiques sous forme électronique, et à restituer lesdites images animées combinées avec les images synthétiques en synchronisme par deux moniteurs de visualisation correspondants, associés à des moyens de renvoi des images visualisées respectivement vers l'oeil gauche et vers l'oeil droit d'un observateur.

Un dispositif selon l'invention pour la mise en oeuvre de ce procédé comporte un premier et un second lecteurs de vidéo-disques, respectivement pour la restitution d'une séquence d'images gauches et celle d'une séquence d'images droites, des moyens de synchronisation de la vitesse de rotation des deux disques correspondants dans lesdits lecteurs, des moyens pour commander le démarrage simultané des deux lecteurs sur une même image des deux séquences, deux moniteurs respectivement pour la visualisation des images restituées par les deux lecteurs, des moyens d'incrustation, de type gauche et droite respectivement associés aux deux lecteurs, pour incruster dans les images gauches et droites restituées par les lecteurs, des symboles ou images synthétiques, et des moyens associés de renvoi des images visualisées respectivement vers l'oeil gauche et vers l'oeil droit d'un observateur.

Les signaux correspondant aux symboles ou images synthétiques, déterminés préalablement pour définir une forme et une position, fixes ou mobiles, dans les images animées gauche et droite, sont combinés avec les signaux vidéo restitués par les lecteurs, de sorte que les symboles ou images synthétiques soient visualisés par les moniteurs en superposition ou mélange avec les images animées restituées par les lecteurs correspondants.

Dans les jeux d'arcade, le dispositif selon l'invention peut avantageusement être conçu pour permettre de faire apparaître les images animées visualisées, en même temps, avec relief à un observateur principal, un joueur notamment, et sans relief à des spectateurs voisins.

D'autres avantages et d'autres caractéristiques de l'invention apparaîtront dans le cours de la description qui suit. Celle-ci concerne deux modes de réalisation particuliers, choisis à titre d'exemples et illustrés par les dessins annexés, dans lesquels

- la figure 1 constitue le schéma d'un premier mode de réalisation du dispositif de l'invention, avec un système de renvoi organisé autour d'un observateur unique ;
- la figure 2 représente schématiquement un deuxième mode de réalisation, avec visualisation à la fois avec et sans relief.

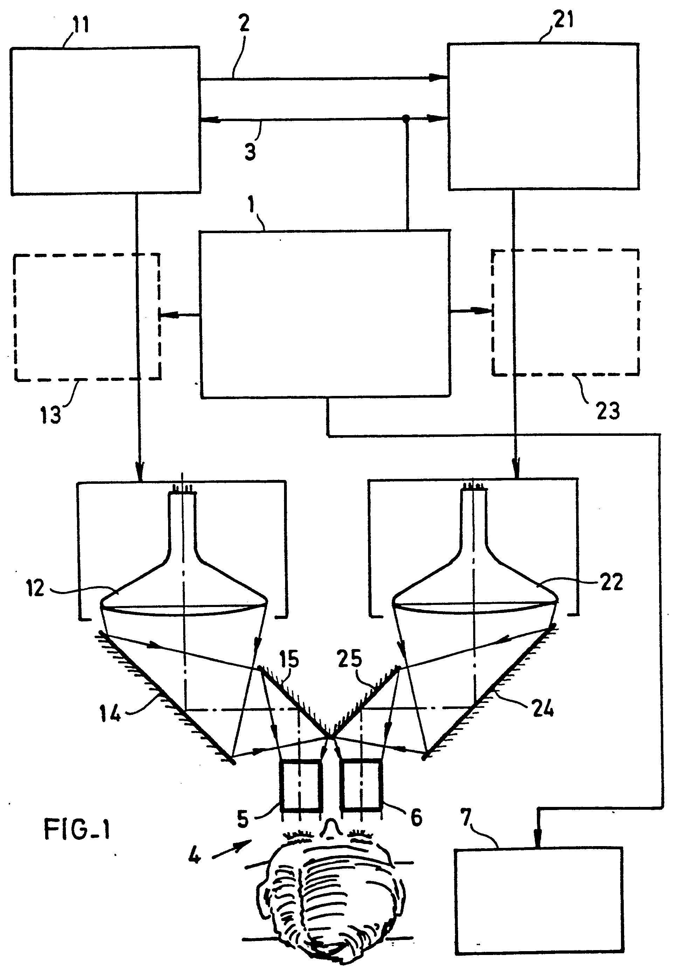

Comme l'illustre la figure 1, un dispositif selon l'invention comprend deux lecteurs de vidéo-disques 11 et 21, auxquels sont associés deux moniteurs 12 et 22, qui visualisent sur leurs écrans respectifs, les images vidéo restituées par les lecteurs correspondants, les vitesses de rotation des disques dans les deux lecteurs sont synchronisées pour rester en permanence identiques ; cette synchronisation est assurée d'une manière en soi connue, les mécanismes internes du premier lecteur 11 commandant également l'entraînement du disque dans le second lecteur 21 (flèche 2). Les deux lecteurs 11 et 12 sont aussi placés sous la commande d'un calculateur digital 1, qui contient toutes les données et instructions nécessaires au fonctionnement de l'ensemble du dispositif.

Les disques qui sont introduits dans les lecteurs 11 et 21 contiennent l'enregistrement, sous forme de signaux vidéo, de deux séquences d'images animées correspondant à la même scène observée en stéréoscopie. Autrement dit, les prises de vues correspondantes ont été effectuées simultanément sur la même scène, au moyen de deux caméras vidéo, la scène étant vue sous deux angles différents par ces caméras. A titre d'exemple, les deux caméras sont écartées d'un mètre environ, pour une scène prise à quelques dizaines de mètres de distance.

Il résulte de ce qui précède que les images qui sont restituées par les lecteurs 11 et 21 et visualisées sur les écrans des moniteurs 12 et 22 sont des séquences d'images animées stéréoscopiques, correspondant respectivement à l'oeil gauche et l'oeil droit d'un même observateur. Sur la figure 1, le lecteur 11 est supposé réservé au disque de la séquence d'images gauches, et le lecteur 12 au disque de la séquence d'images droites. Naturellement, les disques peuvent contenir plusieurs séquences de scènes successives différentes.

La figure 1 illustre par une flèche 3 que les lecteurs sont commandés par le calculateur 1 de manière à démarrer simultanément sur une même image de leurs séquences respectives, ce qu'il est aisé de contrôler avec une grande précision s'agissant de vidéo-disques. On voit par ailleurs, que le même calculateur 1, équipé d'interfaces électroniques appropriées, assure le fonctionnement de deux dispositifs d'incrustation 13 et 23. Associés respectivement aux deux lecteurs, ces dispositifs permettent d'incruster, d'une manière en soi connue, dans les images restituées par les lecteurs, des symboles ou images synthétiques, représentant par exemple des objets ou cibles que l'observateur devrait viser, qu'il s'agisse notamment d'un joueur dans un appareil de jeux d'arcade ou d'un opérateur commandant un tir ou une séquence de tir dans un simulateur d'instruction au tir.

Les informations caractérisant ces symboles ou images, aussi bien dans leur forme propre que dans leur position par rapport à la scène sur laquelle ils apparaissent et dans leurs évolutions éventuelles, sont fournies par le calculateur, qui les détermine à partir de règles et de données préalablement enregistrées, suivant une technique en elle-même classique. Toutefois, l'incrustation est effectuée de manière à faire elle-même apparaître ces symboles ou images avec un effet de relief. Pour cela, les informations, qui donnent les instructions d'incrustation, sont déterminées différemment par le calculateur pour les deux dispositifs d'incrustation, associés respectivement au lecteur de gauche et au lecteur de droite, de telle sorte que l'image incrustée par le premier corresponde au point de vue de l'image de gauche et que l'image incrustée par le second corresponde au point de vue de l'image de droite. Autrement dit, les images incrustées sont restituées à gauche et à droite telles qu'elles seraient vues sous le même écart angulaire que les images restituées par les lecteurs.

Pour reconstituer l'effet de relief, les deux séquences d'images visibles sur les écrans simultanément sont regardées à travers respectivement les deux oculaires d'une lunette 4. Deux systèmes de renvoi optique symétriques, constitués par des miroirs à réflexion totale, 14 et 15 d'une part, 24 et 25 d'autre part, transmettent les images gauches en provenance du lecteur 11 et du moniteur 12 vers l'oculaire gauche 5 de la lunette, et les images droites en provenance du lecteur 21 et du moniteur 22 vers l'oculaire droit 6.

L'utilisateur regardant à travers la lunette, dispose à portée de main, d'un clavier de commande, en général avec une manette, qui lui permettent de transmettre des instructions au calculateur. Il peut ainsi commander un projectile simulé au moyen duquel il vise des cibles apparaissant sur la scène visualisée en stéréoscopie. On remarquera à ce sujet un perfectionnement important apporté par l'invention au dispositif de simulation de tir, qu'il soit à finalité ludique ou destiné à l'entraînement au maniement de systèmes d'armes: c'est la possibilité d'apprécier ou de mesurer la distance d'objets situés dans un paysage naturel.

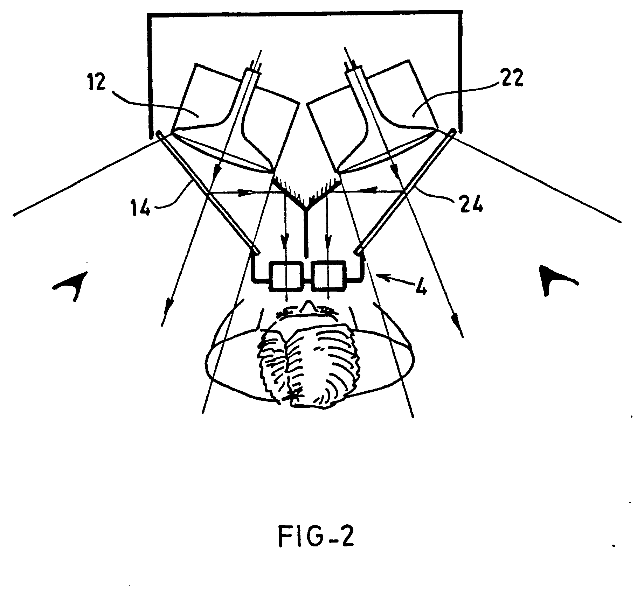

Sur la figure 2, on a schématisé une variante de réalisation du dispositif, particulièrement appropriée pour un jeu d'arcade. On a représenté seulement les dispositions qui diffèrent de ce qui a été illustré par la figure 1, au niveau de la visualisation et de l'observation des séquences d'images animées restituées. On voit que les écrans des moniteurs 12 et 22 sont disposés obliquement, dans des directions divergentes, et que les miroirs 14 et 24 sont de type semi-réfléchissant. De la sorte, les systèmes de renvoi optique transmettent les images respectives aux oculaires gauche et droit de la lunette 4 comme dans le cas précédent, mais en outre, les mêmes images sont visibles par des spectateurs environnants, les images gauches dans un angle à gauche de la lunette, les images droites sous un angle symétrique à droite de la lunette. L'usage de la lunette peut rester réservé à un "joueur", qui est le seul à bénéficier de l'effet de relief.

## Revendications

1. Procédé d'enregistrement et de restitution stéréoscopique d'images synthétiques incrustées sur images vidéo animées réelles, caractérisé en ce qu'il consiste essentiellement à enregistrer une scène animée, observée sous deux angles différents, sous forme de signaux vidéo sur deux vidéo-disques, qui contiennent ainsi après enregistrement une séquence d'images gauches et une séquence d'images droites respectivement, à constituer des symboles ou images synthétiques sous forme électronique et à restituer lesdites images animées combinées avec les images synthétiques en synchronisme par deux moniteurs de visualisation correspondants, associés à des moyens de renvoi des images visualisées respectivement vers l'oeil gauche et vers l'oeil droit d'un observateur.

2. Dispositif pour la mise en oeuvre du procédé selon la revendication 1, caractérisé en ce qu'il comporte un premier et un second lecteurs (11, 21) de videodisques, respectivement pour la restitution d'une séquence d'images gauches et celle d'une séquence d'images droites, des moyens d'incrustation (13, 23) de type gauche et droite, respectivement associés aux deux lecteurs, pour incruster dans les images gauches et droites restituées par les lecteurs, des symboles ou images synthétiques, des moyens (2) de synchronisation de la vitesse de rotation des deux disques correspondants dans lesdits lecteurs (11, 21), des moyens (3) pour commander le démarrage simultané des deux lecteurs sur une même image des deux séquences, deux moniteurs (12, 22) respectivement pour la visualisation des images restituées par les deux lecteurs, et des moyens associés de renvoi des images visualisées respectivement vers l'oeil gauche et vers l'oeil droit d'un observateur.

3. Dispositif suivant la revendication 2, caractérisé en ce que lesdits symboles ou images synthétiques sont déterminés en type gauche et droit pour correspondre au point de vue gauche et droit, avec le même écart angulaire que les images restituées par les lecteurs, respectivement.

4. Dispositif suivant la revendication 2 ou 3, caractérisé en ce que lesdits moniteurs (12, 22) comportent des écrans de visualisation qui sont orientés obliquement dans des directions divergentes, et en ce que lesdits moyens de renvoi comportent des miroirs semi-réfléchissants symétriques laissant transmettre les images des moniteurs associés de part et d'autre d'une lunette (4) d'observation en relief à laquelle les images sont également transmises, respectivement vers les oculaires gauche et droit.

## Patentansprüche

1. Verfahren zur stereoskopischen Aufnahme und Wiedergabe von synthetischen Bildern, die realen Videofilmaufnahmen überlagert sind, dadurch gekennzeichnet, daß es hauptsächlich darin besteht, eine Filmszene, beobachtet aus zwei verschiedenen Winkeln, in Form von Signalen auf zwei Video-Disketten aufzunehmen, die also nach der Aufnahme entsprechend eine Sequenz von linken Bildern und eine Sequenz von rechten Bildern enthalten, Symbole oder Synthetischen Bilder in elektronischer Form herzustellen und die Videofilmaufnahme kombiniert mit den synthetische Bildern synchron durch zwei entsprechende Sichtmonitore wiederzugeben, verbunden mit Vorrichtungen für die Wiedergabe der sichtbar gemachten Bilder sowohl für das linke als auch für das rechte Auge des Betrachters.

2. Vorrichtung zur Durchführung des Verfahrens gemäß Anspruch 1, dadurch gekennzeichnet, daß sie einen ersten und einen zweiten Video-Disketten-Leser besitzt, d. h. je einen für die Wiedergabe der Sequenz von linken Bildern und der Sequenz von rechten Bildern, je eine linke und rechte überlagerungseinrichtung (13, 23), die den beiden Lesern zugeordnet sind und zur überlagerung der Symbole oder synthetischen Bilder auf die linken und rechten Bildern, de durch die Leser wiedergegeben werden, dienen, Mittel (2) zur Synchronisation der Drehgeschwindigkeit der zwei entsprechenden Disketten in den Lesern (11, 21), Mittel zur Sicherstellung eines gleichzeitigen Anlaufens der beiden Leser bei einem gleichen Bild der zwei Sequenzen, zwei Monitoren (12, 22) für die Sichtbarmachung der durch die beiden Leser wiedergegebenen Bilder und Mittel zur übertragung der sichtbar gemachten Bilder auf das linke bzw. auf das rechte Auge des Betrachters.

3. Vorrichtung gemäß Anspruch 2, dadurch gekennzeichnet, daß die Symbole oder synthetischen Bilder als linke und rechte Bilder entsprechend dem linken bzw. rechten Blickpunkt mit dem gleichen Winkelabstand wie die von den Lesern wiedergegebenen Bilder hergestellt werden.

4. Vorrichtung gemäß den Ansprüchen 2 oder 3, dadurch gekennzeichnet, daß die Monitore (12, 22) Bildschirme besitzen, die schräg in zwei divergierende Richtungen gerichtet sind und daß die Mittel zur übertragung der Bilder zum Betrachter teildurchlässige symmetrische Spiegel umfassen, welche die Bilder der Monitore jeweils auf den entsprechenden Teil einer 3D-Beobachtungsbrille (4) übertragen, mittels der die Bilder gleichmäßig auf das linke bzw. auf das rechte Auge übertragen werden.

## Claims

1. A method of recording and stereoscopically reconstituting dubbed synthetic pictures on real animated video pictures, characterised in that it essentially comprises recording an animated scene, seen from two different angles, in the form of video signals onto two video discs, which thus contain after the recording step a sequence of left hand pictures and a sequence of right hand pictures respectively, creating synthetic symbols or pictures in an electronic form, and reconstituting the said animated pictures combined with the synthetic pictures in synchronism with each other by means of two corresponding visual display monitors, associated with means for transmitting the pictures displayed thereby, respectively towards the left eye and towards the right eye of an observer.

2. Apparatus for performing the method according to Claim 1, characterised in that it comprises a first video disc reader and a second video disc reader (11, 21), respectively for the recording of a sequence of left hand pictures and the recording of a sequence of right hand pictures, dubbing means (13, 23) of a left hand type and a right hand type respectively, associated with the two readers for dubbing synthetic symbols or pictures onto the left hand and right hand pictures recorded by the readers, means (2) for synchronising the speed of rotation of the two corresponding discs in the said readers (11, 21), means (3) for controlling the two readers so that they start operating simultaneously on a common picture of the two sequences, two monitors (12, 22), respectively for the visual display of the pictures reconstituted by the two readers, and associated means for transmitting the displayed pictures respectively towards the left eye and towards the right eye of an observer.

3. Apparatus according to Claim 2, characterised in that the said synthetic symbols or pictures are predetermined to be of the left hand or right hand type so as to correspond with the left hand or right hand point of viewing, with the same angular displacement as the pictures reconstituted by the respective readers.

4. Apparatus according to Claim 2 or Claim 3, characterised in that the said monitors (12, 22) include display screens which are orientated obliquely in divergent directions, and in that the said transmitting means includes symmetrical semireflecting mirrors for allowing the pictures from the monitors associated with each side to be transmitted to a stereoscopic viewing device (4), in which the pictures are also transmitted respectively towards its left hand and right hand optics.

FIG.1

FIG-2